(19) Europäisches Patentamt
European Patent Office
Office européen des brevets

(11) **EP 3 989 591 A1**

(12) **EUROPEAN PATENT APPLICATION**
published in accordance with Art. 153(4) EPC

(43) Date of publication:
**27.04.2022 Bulletin 2022/17**

(51) International Patent Classification (IPC):
***H04N 21/4782*** *(2011.01)*

(21) Application number: **20831534.1**

(52) Cooperative Patent Classification (CPC):
**G11B 27/031; G06V 10/56; G06V 20/46; G06V 20/49; G11B 27/28**

(22) Date of filing: **19.06.2020**

(86) International application number:
**PCT/CN2020/097192**

(87) International publication number:
**WO 2020/259412 (30.12.2020 Gazette 2020/53)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2019 CN 201910550282**

(71) Applicant: **TENCENT TECHNOLOGY (SHENZHEN) COMPANY LIMITED**
**Shenzhen, GUANGDONG 518057, (CN)**

(72) Inventors:
• **SHENG, Hui**
**Shenzhen, Guangdong 518057 (CN)**
• **SUN, Chang**
**Shenzhen, Guangdong 518057 (CN)**
• **HUANG, Dongbo**
**Shenzhen, Guangdong 518057 (CN)**

(74) Representative: **EP&C**
**P.O. Box 3241**
**2280 GE Rijswijk (NL)**

(54) **RESOURCE DISPLAY METHOD, DEVICE, APPARATUS, AND STORAGE MEDIUM**

(57) Embodiments of the present application disclose a resource display method, a device, an apparatus, and a storage medium, pertaining to the technical field of computers. The method comprises: acquiring one or more target sub-videos of a target video; acquiring, on the basis of image frames of any one of the target sub-videos, one or more key frames of said target sub-video; dividing, according to color clustering, any one of the key frames of said target sub-video into multiple regions, setting a region meeting an area requirement in the multiple regions as a selectable region of said key frame; setting the selectable region of each of the key frames as selectable regions of said target sub-video; and selecting a target region from selectable regions of the target sub-videos, and displaying a resource in the target region. The invention automatically divides a key frame into multiple regions by means of color clustering, selects a target region from selectable regions to display a resource, and accordingly determines a suitable position for displaying the resource by means of an automatic search, thereby achieving high efficiency in displaying resources, and saving time and on manual labor cost.

Obtain one or more target sub-videos of a target video, each target sub-video including a plurality of image frames — 201

Obtain at least one key frame of any target sub-video based on image frames of the any target sub-video — 202

Divide any key frame of the any target sub-video into a plurality of regions according to color clustering, and use a region that meets an area requirement in the plurality of regions as a candidate region of the any key frame — 203

Use candidate regions of key frames of the any target sub-video as candidate regions of the any target sub-video; and select a target region from candidate regions of the target sub-videos, and display a resource in the target region — 204

FIG. 2

## Description

This application claims priority to Chinese Patent Application No. 201910550282.5, entitled "RESOURCE DISPLAY METHOD, APPARATUS, AND DEVICE, AND STORAGE MEDIUM" filed on June 24, 2019, which is incorporated herein by reference in its entirety.

## TECHNICAL FIELD

Embodiments of this application relate to the field of computer technologies, and in particular, to a resource display method, apparatus, and device, and a storage medium.

## BACKGROUND

With the development of computer technologies, more methods can be used to display resources in videos. Using display of advertising resources as an example, a novel method of displaying advertising resources is to display print or physical advertising resources at appropriate positions, such as desktops, walls, photo frames, or billboards, in videos.

In a process of displaying a resource in the related art, a professional designer determines, through manual retrieval in a video, a position at which a resource can be displayed, and then displays the resource at the position.

In the implementation process of the embodiments of this application, it is found that the related art has at least the following problems:

In the related art, a position at which a resource can be displayed is determined by a professional designer through manual retrieval in a video. The manual retrieval has low efficiency and consumes a lot of time and manpower, resulting in reduced efficiency of resource display.

## SUMMARY

Embodiments of this application provide a resource display method, apparatus, and device, and a storage medium, which can be used to resolve a problem in the related art. The technical solutions are as follows:

According to an aspect, the embodiments of this application provide a resource display method, the method including:

obtaining one or more target sub-videos of a target video, each target sub-video comprising a plurality of image frames;

obtaining at least one key frame of any target sub-video based on image frames of the any target sub-video;

dividing any key frame of the any target sub-video into a plurality of regions according to color clustering, and using a region that meets an area requirement in the plurality of regions as a candidate region of the any key frame;

using candidate regions of key frames of the any target sub-video as candidate regions of the any target sub-video; and selecting a target region from candidate regions of the target sub-videos, and displaying a resource in the target region.

According to an aspect, a resource display apparatus is provided, the apparatus including:

a first obtaining module, configured to obtain one or more target sub-videos of a target video, each target sub-video comprising a plurality of image frames;

a second obtaining module, configured to obtain at least one key frame of any target sub-video based on image frames of the any target sub-video;

a division module, configured to divide any key frame of the any target sub-video into a plurality of regions according to color clustering;

a selection module, configured to use a region that meets an area requirement in the plurality of regions as a candidate region of the any key frame; use candidate regions of key frames of the any target sub-video as candidate regions of the any target sub-video; and select a target region from candidate regions of the target sub-videos; and

a display module, configured to display a resource in the target region.

According to another aspect, a computer device is provided, the computer device including a processor and a memory, the memory storing at least one instruction, the at least one instruction, when executed by the processor, implementing the foregoing resource display method.

According to another aspect, a computer-readable storage medium is further provided, the computer-readable storage medium storing at least one instruction, the at least one instruction, when executed, implementing the foregoing resource display method.

According to another aspect, a computer program product or a computer program is further provided, the computer program product or the computer program including computer instructions, the computer instructions being stored in a computer-readable storage medium, a processor of a computer device reading the computer instructions from the computer-readable storage medium, and the processor executing the computer instructions to cause the computer device to perform the foregoing resource display method.

The technical solutions provided in the embodiments of this application produce at least the following beneficial effects:

A key frame is automatically divided into a plurality of regions according to a color clustering method, and then a target region is selected from candidate regions that meet an area requirement to display a resource. An appropriate position for displaying a resource is determined by using an automatic retrieval method. Automatic retrieval has high efficiency, and can save time and reduce labor costs, thereby improving the efficiency of resource display.

BRIEF DESCRIPTION OF THE DRAWINGS

To describe the technical solutions in the embodiments of this application more clearly, the following briefly introduces the accompanying drawings required for describing the embodiments. Apparently, the accompanying drawings in the following description show only some embodiments of this application, and a person of ordinary skill in the art may still derive other accompanying drawings from the accompanying drawings without creative efforts.

FIG. 1 is a schematic diagram of an implementation environment according to an embodiment of this application.

FIG. 2 is a flowchart of a resource display method according to an embodiment of this application.

FIG. 3 is a schematic diagram of a process of retrieving an appropriate position for displaying a resource according to an embodiment of this application.

FIG. 4 is a schematic diagram of optical flow information according to an embodiment of this application.

FIG. 5 is a schematic diagram of dividing regions according to color clustering according to an embodiment of this application.

FIG. 6 is a schematic diagram of determining a candidate region according to an embodiment of this application.

FIG. 7 is a schematic diagram of displaying a resource in a target region according to an embodiment of this application.

FIG. 8 is a schematic diagram of a resource display apparatus according to an embodiment of this application.

FIG. 9 is a schematic structural diagram of a resource display device according to an embodiment of this application.

DESCRIPTION OF EMBODIMENTS

To make objectives, technical solutions, and advantages of the embodiments of this application clearer, the following further describes in detail implementations of this application with reference to the accompanying drawings.

With the development of computer technologies, more methods can be used to display resources in videos. Using display of advertising resources as an example, a novel method of displaying advertising resources is to display print or physical advertising resources at appropriate positions, such as desktops, walls, photo frames, or billboards, in videos.

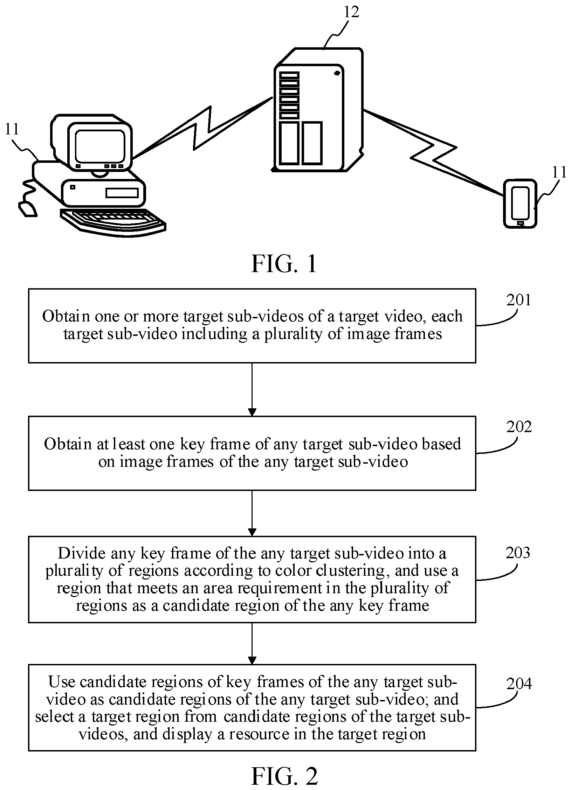

Therefore, the embodiments of this application provide a resource display method. FIG. 1 is a schematic diagram of an implementation environment of the method provided in the embodiments of this application. The implementation environment includes: a terminal 11 and a server 12.

An application program or a web page capable of displaying a resource is installed on the terminal 11. The application program or web page can play videos. When a video in the application program or web page needs to display a resource, the method provided in the embodiments of this application can be used to retrieve a position for displaying the resource in the video, and then display the resource at the position. The terminal 11 can obtain a target video that needs to display a resource, and then transmit the target video to the server 12 for storage. Certainly, the target video can also be stored on the terminal 11, so that when the target video needs to display a resource, the resource is displayed by using the method provided in the embodiments of this application.

In a possible implementation, the terminal 11 is a smart device such as a mobile phone, a tablet computer, a personal computer, or the like. The server 12 is a server, or a server cluster including a plurality of servers, or a cloud computing service center. The terminal 11 and the server 12 establish a communication connection through a wired or wireless network.

A person skilled in the art is to understand that the terminal 11 and server 12 are only examples, and other existing or potential terminals or servers that are applicable to the embodiments of this application are also to be included in the scope of protection of the embodiments of this application, and are included herein by reference.

Based on the implementation environment shown in FIG. 1, the embodiments of this application provide a resource display method, which is applicable to a computer device. The computer device being a terminal is used as an example. As shown in FIG. 2, the method provided in the embodiments of this application includes the following steps:

Step 201: Obtain one or more target sub-videos of a target video, each target sub-video including a plurality of image frames.

Generally, video refers to various technologies for capturing, recording, processing, storing, transmitting, and reproducing a series of static images in the form of electrical signal. When a continuous image change includes 24 or more frames of screens per second, according to the principle of persistence of vision, because human eyes cannot distinguish a single frame of static screen, during playback, consecutive screens present a smooth and continuous visual effect, and such consecutive screens are referred to as a video. When a video needs to display a resource, the terminal obtains the video that needs to display a resource, and uses the video that needs to display the resource as a target video. For example, a method of obtaining the target video is to download the target video from the server or extract the target video from a video buffered by the terminal. Because a video includes an extremely large amount of complex data, when video-related processing is performed, the video is usually segmented into a plurality of sub-videos according to a hierarchical characteristic of the video, and each sub-video includes a plurality of image frames.

For example, the hierarchical characteristic of the video is that: the hierarchy of the video is sequentially divided into three levels of logical units: frame, shot, and scene, from bottom to top. Frame is the most basic element of video data. Each image is a frame. A group of image frames are played consecutively in a specific sequence and at a specified speed to become a video. Shot is the smallest semantic unit of video data. Content in image frames captured by a camera in a shot does not change much, and frames in the same shot are relatively similar. Scene generally describes high-level semantic content included in a video clip and includes several shots that are semantically related and similar in content.

In a possible implementation, a method of segmenting the target video into a plurality of sub-videos according to the hierarchical characteristic of a video is to segment the target video according to shots to obtain the plurality of sub-videos. After the target video is segmented according to shots to obtain the plurality of sub-videos, one or more target sub-videos are obtained from the sub-videos obtained through the segmentation. An appropriate position for displaying a resource is retrieved based on the one or more target sub-videos.

The basic principle of segmenting a video according to shots is: detecting boundaries of each shot in the video by using a shot boundary detection algorithm, and then, segmenting the whole video into several separate shots, that is, sub-videos, at the boundaries. Usually, to segment the whole video according to shots, the following steps need to be performed:

Step 1: Segment the video into image frames, extract features of the image frames, and measure, based on the features of the image frames, whether content in the image frames changes. The feature of the image frame herein refers to a feature that can represent the whole image frame. A relatively common image frame feature includes a color feature of an image frame, a shape feature of an image frame, an edge contour feature of an image frame, or a texture feature of an image frame. In the embodiments of this application, an extracted feature of an image frame is not limited by this application. For example, a color feature of an image frame is extracted. Exemplarily, the color feature of the image frame refers to a color that appears most frequently in the image frame.

Step 2: Calculate, based on the extracted features of the image frames, a difference between a series of successive frames by using a metric standard, the difference between the frames being used for representing a feature change degree between the frames. For example, if the extracted feature of the image frame refers to the color feature of the image frame, calculating a difference between frames includes calculating a difference between color features of the frames.

For example, a method of calculating a difference between frames includes calculating a distance between features of two image frames, and using the distance as a difference between the two image frames. A common way of representing a distance between features include a Euclidean distance, a Mahalanobis distance, and a quadratic distance. In the embodiments of this application, the way of representing a distance is not limited by this application, and the way of representing a distance can be flexibly selected according to a type of a feature of an image frame.

Step 3: Set a threshold. The threshold may be set based on experience or adjusted based on video content. Then differences between a series of successive frames are compared with the threshold. If a place at which a difference between two frames exceeds the threshold, the place is marked as a shot boundary, it is determined that a shot transition exists at the place and that the two frames belong to two different shots. If a place at which a difference between two frames does not exceed the threshold, the place is marked as a non-shot boundary. It is determined that no shot transition exists at the place, and the two frames belong to the same shot.

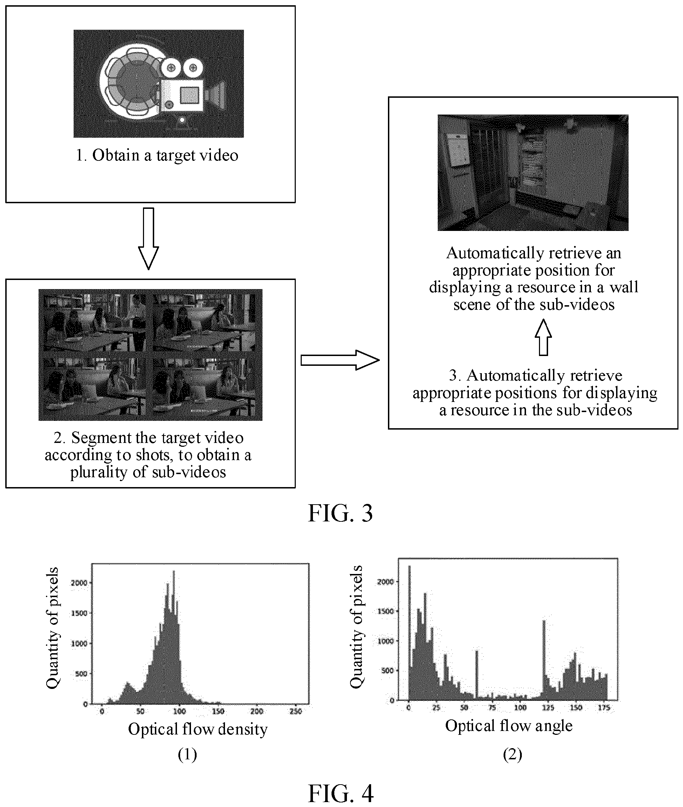

In the embodiments of this application, a specific method of shot segmentation is not limited, and a method is acceptable if a target video can be segmented into a plurality of sub-videos according to shots. For example, the PyDetectScene tool can be used for shot segmentation and the like. After the target video is segmented according to shots, each sub-video can be processed to retrieve an appropriate position for displaying a resource. For example, a process of retrieving an appropriate position for displaying a resource is shown in FIG. 3. First, a target video is obtained, and then the target video is segmented according to shots to obtain a plurality of sub-videos. Then an appropriate position for displaying a resource is automatically retrieved in each sub-video. In addition, the sub-videos may include one or more scenes, for example, a wall scene and a photo frame scene. An appropriate position for displaying a resource can be automatically retrieved in any scene of the sub-videos. For example, the appropriate positions for displaying a resource can be automatically retrieved in a wall scene of a sub-video.

In a possible implementation, obtaining one or more target sub-videos of a target video includes: for any sub-video in the target video, obtaining optical flow information of the any sub-video; and deleting the any sub-video responsive to the optical flow information of the any sub-video not meeting an optical flow requirement, and using one or more sub-videos in sub-videos that are not deleted as the target sub-video or target sub-videos. In a possible implementation, for a case in which the target video is first segmented according to shots before one or more target sub-videos of the target video are obtained, the any sub-video in the target video refers to any sub-video in the sub-videos obtained by segmenting the target video according to shots.

The optical flow information can represent motion information between successive image frames of any sub-video and light information of each image frame of any sub-video. The optical flow information includes one or more of an optical flow density and an optical flow angle. The optical flow density represents a motion change between successive image frames, and the optical flow angle represents a direction of light in an image frame. In a possible implementation, specific cases of deleting the any sub-video responsive to the optical flow information of the any sub-video not meeting an optical flow requirement vary with different optical flow information. For example, specific cases of deleting the any sub-video responsive to the optical flow information of the any sub-video not meeting an optical flow requirement include, but are not limited to, the following three cases:

Case 1: The optical flow information includes an optical flow density; the optical flow information of the any sub-video includes an optical flow density between every two successive image frames of the any sub-video and an average optical flow density of the any sub-video; and the any sub-video is deleted responsive to a ratio of an optical flow density between any two successive image frames of the any sub-video to the average optical flow density of the any sub-video exceeding a first threshold.

The optical flow density represents a motion change between two successive image frames. The motion change between two successive image frames herein refers to a motion change between an image frame that ranks higher in a playback order and a successive image frame that ranks lower in the playback order. In the same sub-video, a greater optical flow density between two successive image frames indicates a greater motion change between the two successive image frames. According to an optical flow density between every two successive image frames of the any sub-video, an average optical flow density of the sub-video can be obtained. An optical flow density between every two successive image frames is compared with the average optical flow density respectively. If a ratio of an optical flow density between any two successive image frames to the average optical flow density exceeds the first threshold, it indicates that an inter-frame motion change of the sub-video is relatively large, it is not suitable for displaying a resource in a region of the sub-video, and the sub-video is deleted.

The first threshold can be set based on experience, or can be freely adjusted according to application scenarios. For example, the first threshold is set as 2. That is, in any sub-video, if a ratio of an optical flow density between two successive image frames to the average optical flow density exceeds 2, the sub-video is deleted.

In a possible implementation, the optical flow density between every two successive image frames of any sub-video refers to an optical flow density between pixels of every two successive image frames of any sub-video. For example, in a process of obtaining an average optical flow density of any sub-video according to an optical flow density between every two successive image frames of the any sub-video, an optical flow density between pixels of any two successive image frames is used as an optical flow density of pixels of a former image frame or a latter image frame in the any two successive image frames. Then, a quantity of pixels corresponding to each optical flow density is counted according to an optical flow density of pixels of each image frame. Further, the average optical flow density of the sub-video is obtained according to the quantity of pixels corresponding to the each optical flow density. For example, as shown in FIG. 4(1), a horizontal coordinate of the graph represents an optical flow density, and a vertical ordinate represents a quantity of pixels. According to an optical flow density-pixel quantity curve in the graph, a quantity of pixels corresponding to each optical flow density can be obtained, and then an average optical flow density of any sub-video can be obtained.

Case 2: The optical flow information includes an optical flow angle; the optical flow information of the any sub-video includes an optical flow angle of each image frame of the any sub-video, an average optical flow angle of the any sub-video, and an optical flow angle standard deviation of the any sub-video; and the any sub-video is deleted responsive to a ratio of a first numerical value to the optical flow angle standard deviation of the any sub-video exceeding a second threshold. The first numerical value representing an absolute value of a difference between an optical flow angle of any image frame of the any sub-video and the average optical flow angle of the any sub-video.

The optical flow angle represents a direction of light in an image frame. According to optical flow angles of all image frames of any sub-video, an average optical flow angle of the sub-video and an optical flow angle standard deviation of the sub-video can be obtained. The optical flow angle standard deviation refers to a square root of an arithmetic average of a square of a difference between an optical flow angle of each image frame and an average optical flow angle of a sub-video; it reflects a statistical dispersion of the optical flow angle in the sub-video. For example, if any sub-video includes $n$ image frames, an optical flow angle of an image frame in the $n$ image frames is $a_i$, and an average optical flow angle of the sub-video is b, then a calculation formula for an optical flow angle standard deviation c of the sub-video is as follows:

$$c = \sqrt{\frac{1}{n}\sum_{i}^{n}(a_i - b)^2}$$

A difference between an optical flow angle of each image frame of any sub-video and an average optical flow angle of the sub-video is calculated respectively, and an absolute value of the difference is compared with an optical flow angle standard deviation of the sub-video. An absolute value of a difference between an optical flow angle of any image frame and the average optical flow angle of the sub-video is used as a first numerical value. If a ratio of the first numerical value to the optical flow angle standard deviation of the sub-video exceeds a second threshold, it indicates that a light jump in the sub-video is relatively large; it is not appropriate to display a resource in a region of the sub-video, the sub-video is deleted.

The second threshold can be set based on experience, or can be freely adjusted according to application scenarios. For example, the second threshold is set to 3. That is, in any sub-video, if a ratio of an absolute value of a difference between an optical flow angle of an image frame and the average optical flow angle to the optical flow angle standard deviation exceeds 3, the sub-video is deleted. The second threshold can be the same as the first threshold, or different from the first threshold, which is not limited in the embodiments of this application.

In a possible implementation, an optical flow angle of each image frame of any sub-video refers to an optical flow angle of pixels of the each image frame of the any sub-video. For example, in a process of obtaining an average optical flow angle of any sub-video and an optical flow angle standard deviation of the sub-video according to optical flow angles of all image frames of the sub-video, an optical flow angle of each image frame is used as an optical flow angle of pixels of the each image frame. Then, a quantity of pixels corresponding to each optical flow angle is counted according to an optical flow angle of pixels of each image frame. Further, the average optical flow angle and the optical flow angle standard deviation of the sub-video are obtained according to the quantity of pixels corresponding to the each optical flow angle. For example, as shown in FIG. 4(2), a horizontal coordinate of the graph represents an optical flow angle, and a vertical ordinate represents a quantity of pixels. According to an optical flow angle-pixel quantity curve in the graph, a quantity of pixels corresponding to each optical flow angle can be obtained, and then an average optical flow angle of any sub-video and an optical flow angle standard deviation of the any sub-video can be obtained.

Case 3: The optical flow information includes an optical flow density and an optical flow angle; the optical flow information of the any sub-video includes an optical flow density between every two successive image frames of the any sub-video, an average optical flow density of the any sub-video, an optical flow angle of each image frame of the any sub-video, an average optical flow angle of the any sub-video, and an optical flow angle standard deviation of the any sub-video; and the any sub-video is deleted responsive to a ratio of an optical flow density between any two successive image frames of the any sub-video to the average optical flow density of the any sub-video exceeding a first threshold and a ratio of a first numerical value to the optical flow angle standard deviation of the any sub-video exceeding a second threshold. The first numerical value represents an absolute value of a difference between an optical flow angle of any image frame of the any sub-video and the average optical flow angle of the any sub-video.

The first threshold and the second threshold can be set based on experience, or can be freely adjusted according to application scenarios. For example, the first threshold is set to 2, and the second threshold is set to 3. That is, in any sub-video, if a ratio of an optical flow density between two successive image frames to the average optical flow density exceeds 2, and a ratio of an absolute value of a difference between an optical flow angle of an image frame and the average optical flow angle to the optical flow angle standard deviation exceeds 3, the sub-video is deleted.

After a sub-video that does not meet an optical flow requirement is deleted according to any one of the foregoing cases, one or more sub-videos in sub-videos that are not deleted are used as a target sub-video or target sub-videos. In a possible implementation, using one or more sub-videos in sub-videos that are not deleted as the target sub-video or target sub-videos means using all of the sub-videos that are not deleted as the target sub-videos, or selecting one or more sub-videos from the sub-videos that are not deleted as the target sub-video or target sub-videos, which is not limited in the embodiments of this application. For selecting one or more sub-videos from the sub-videos that are not deleted as the target sub-video or target sub-videos, a selection rule can be set based on experience or can be flexibly adjusted according to application scenarios. For example, the selection rule may be randomly selecting a reference quantity of sub-videos from sub-videos that are not deleted as the target sub-videos.

Step 202: Obtain at least one key frame of any target sub-video based on image frames of the any target sub-video.

After a target video is segmented according to shots, the complete target video is segmented into several semantically independent shot units, that is, sub-videos. After the sub-videos are obtained, all the sub-videos are screened according to optical flow information to obtain a target sub-video of which optical flow information meets the optical flow requirement. However, an amount of data included in each target sub-video is still huge. Next, an appropriate quantity of image frames are extracted from each target sub-video as key frames of the target sub-video to reduce an amount of processed data, thereby improving the efficiency of retrieving a position for displaying a resource in the target video.

The key frame is an image frame capable of describing key content of a video, and usually refers to an image frame at which a key action in a motion or change of a character or an object occurs. In a target sub-video, a content change between image frames is not evident. Therefore, the most representative one or more image frames can be extracted as a key frame or key frames of the whole target sub-video.

An appropriate key frame extraction method can extract the most representative image frame without generating too much redundancy. Common key frame extraction methods include extracting a key frame based on shot boundaries, extracting a key frame based on visual content, extracting a key frame based on motion analysis, and extracting a key frame based on clustering. In the embodiments of this application, the key frame extraction method is not limited to the disclosed methods, a method is applicable if an appropriate key frame can be extracted from the target sub-video. For example, if video content is relatively simple, a scene is relatively fixed, or shot activity is relatively low, key frames are extracted by using a method of extracting a key frame based on shot boundaries. That is, the first frame, an in-between frame, and the last frame of each target sub-video are used as key frames. For example, if video content is relatively complex, a key frame is extracted by using a method of extracting a key frame based on clustering. That is, image frames of a target sub-video are divided into several categories through clustering analysis, and an image frame closest to a cluster center is selected as a key frame of the target sub-video. Any target sub-video may have one or more key frames, which is not limited in the embodiments of this application. That is, any target sub-video has at least one key frame.

After at least one key frame of the target sub-video is obtained, when a position for displaying a resource is retrieved in the target sub-video, the retrieval can be performed only in the at least one key frame, so as to improve the efficiency of the retrieval.

Step 203: Divide any key frame of the any target sub-video into a plurality of regions according to color clustering, and use a region that meets an area requirement in the plurality of regions as a candidate region of the any key frame.

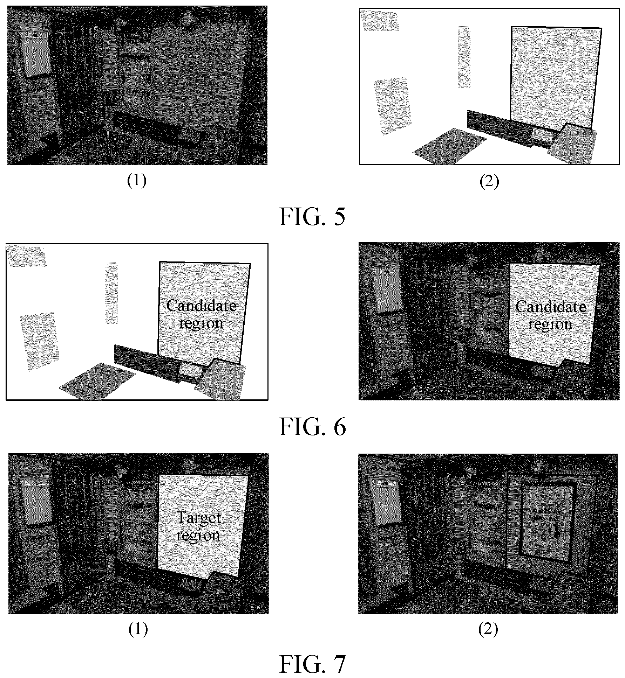

The key frame is the most representative image frame in a target sub-video. In each key frame, there are various regions such as a wall region, a desktop region, and a photo frame region. Different regions have different colors. According to the color clustering method, each key frame can be divided into a plurality of regions, colors in the same region are similar, and colors in different regions are greatly different from each other. For example, after color clustering is performed on a key frame shown in FIG. 5(1), a clustering result shown in FIG. 5(2) can be obtained. The clustering result includes a plurality of regions, and sizes of different regions are greatly different from each other.

Color clustering refers to performing clustering based on color features. Therefore, before the clustering, color features of all pixels in a key frame need to be extracted. When the color features of all pixels in the key frame are extracted, an appropriate color feature space needs to be selected. Common color feature spaces include an RGB color space, an HSV color space, a Lab color space, and a YUV color space. In the embodiments of this application, the selected color space is not limited. For example, color features of all pixels in a key frame are extracted based on the HSV color space. In the HSV color space, H represents hue, S represents saturation, and V represents brightness. Generally, the hue H is measured by using an angle and has a value range of [0, 360]. The hue H is an attribute that is most likely to affect human visual perception, and can reflect different colors of light without being affected by color shading. A value range of the saturation S is [0, 1]. The saturation S reflects a proportion of white in the same hue. A larger value of the saturation S indicates a more saturated color. The brightness V is used to describe a gray level of color shading, and a value range of the brightness V is [0, 225]. A color feature of any pixel in the key frame extracted based on the HSV color space can be represented by a vector $(h_i, s_i, v_i)$.

After color features of all pixels in the key frame are obtained, color clustering is performed on all the pixels in the key frame, and the key frame is divided into a plurality of regions based on a clustering result. Basic steps of performing color clustering on all the pixels in the key frame are as follows:

Step 1: Set a color feature distance threshold d. A color feature of the first pixel is used as an initial cluster center $C_1$ of the first set $S_1$, and a quantity of pixels in $S_1$ is $N_1=1$. The color complexity in the same set can be controlled by adjusting the magnitude of the color feature distance threshold d.

Step 2: In any key frame, for any pixel, calculate a distance $D_i$ between a color feature of the pixel and a color feature of $C_1$. If $D_i$ does not exceed the color feature distance threshold d, the pixel is added to the set $S_1$, and the cluster center and the quantity of pixels of the set $S_1$

are amended. If $D_i$ exceeds the color feature distance threshold d, the pixel is used as a cluster center $C_2$ of a new set $S_2$, and so on.

Step 3: For each set $S_i$, if there is such a set $S_j$ that a color feature distance of cluster centers of the two sets is less than the color feature distance threshold d, merge the set $S_j$ into the set $S_i$, amend the cluster center and the quantity of pixels of the set $S_i$, and delete the set $S_j$.

Step 4: Repeat steps 2 and 3 until all pixels are in different sets. In this case, each set converges.

After convergence, each set is in one region, and different sets are in different regions. Through the foregoing process, any key frame can be divided into a plurality of regions, and color features of all pixels in the same region are similar. The plurality of regions may include some regions with small areas. In a possible implementation, a region of which a quantity of included pixels is less than a quantity threshold is deleted. The quantity threshold can be set according to a quantity of pixels in a key frame, or can be adjusted according to content of a key frame.

There are many algorithms for implementing color clustering. In a possible implementation, a mean shift algorithm is used to perform color clustering on a key frame.

After any key frame is divided into a plurality of regions according to color clustering, and a region that meets an area requirement in the plurality of regions is used as a candidate region of the any key frame. In a possible implementation, using a region that meets an area requirement as a candidate region of the any key frame includes: using any region in the plurality of regions as the candidate region of the any key frame responsive to a ratio of an area of the any region to an area of the any key frame exceeding a third threshold.

Specifically, for any key frame, after color clustering, a plurality of regions are obtained. Areas of all regions are compared with the area of the key frame. If a ratio of an area of a region to the area of the key frame exceeds a third threshold, the region is used as a candidate region of the key frame. In this process, a region with a large area can be retrieved for displaying a resource, thereby improving the effect of resource display. The third threshold can be set based on experience, or can be freely adjusted according to application scenarios. For example, when a region representing a wall surface is retrieved, the third threshold is set to 1/8. That is, a ratio of an area of a candidate region to an area of a key frame needs to exceed 1/8, and a candidate region obtained in this way is more likely to represent a wall surface. As shown in FIG. 6, a region with an area of which a ratio to the area of the key frame exceeds 1/8 is regarded as a candidate region of the key frame.

Step 204: Use candidate regions of key frames of the any target sub-video as candidate regions of the any target sub-video; and select a target region from candidate regions of the target sub-videos, and display a resource in the target region.

For any target sub-video, after candidate regions of each key frame are obtained, potential positions at which each key frame can display a resource can be obtained, and the resource can be displayed at the positions. After candidate regions of all key frames of the any target sub-video are obtained, the candidate regions of all the key frames of the any target sub-video are used as candidate regions of the any target sub-video. The candidate regions of any target sub-video are potential positions at which a resource can be displayed in the any target video.

According to the process of obtaining the candidate regions of any target sub-video, the candidate regions of each target sub-video can be obtained. The candidate regions of each target sub-video refer to candidate regions of all key frames of the target sub-video. After the candidate regions of each target sub-video are obtained, target regions can be selected from the candidate regions of each target sub-video to display a resource. In a possible implementation, the process of selecting the target regions in the candidate regions of each target sub-video can either mean using all candidate regions of the each target sub-video as target regions, or mean using some candidate regions in the candidate regions of the each target sub-video as target regions, which is not limited in the embodiments of this application.

There may be on or more target regions, and the same resource or different resources may be displayed in different target regions, which is not limited in the embodiments of this application. Since a target region is obtained based on candidate regions of key frames, the target region is in some or all key frames. A process of displaying a resource in the target region is a process of displaying a resource in key frames including the target region. Different key frames of the same target sub-video can display the same resource or different resources. Similarly, different key frames of different target sub-videos can display the same resource or different resources.

Using a resource being an advertising resource as an example, for a key frame shown in FIG. 7(1), after one or more candidate regions are selected as a target region or target regions in candidate regions of each target sub-video, the key frame includes a target region. The advertising resource is displayed in the target region, and a display result is shown in FIG. 7(2).

In the embodiments of this application, a key frame is automatically divided into a plurality of regions according to a color clustering method, and then a target region is selected from candidate regions that meet an area requirement to display a resource. An appropriate position for displaying a resource is determined by using an automatic retrieval method. Automatic retrieval has high efficiency, and can save time and reduce labor costs, thereby improving the efficiency of resource display.

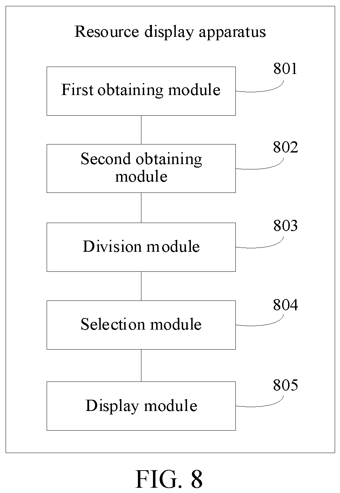

Based on the same technical approach, referring to FIG. 8, an embodiment of this application provides a resource display apparatus, the apparatus including:

a first obtaining module 801, configured to obtain one or more target sub-videos of a target video, each target sub-video including a plurality of image frames;

a second obtaining module 802, configured to obtain at least one key frame of any target sub-video based on image frames of the any target sub-video;

a division module 803, configured to divide, for any key frame, the any key frame into a plurality of regions according to color clustering;

a selection module 804, configured to use a region that meets an area requirement in the plurality of regions as a candidate region of the any key frame; use candidate regions of key frames of the any target sub-video as candidate regions of the any target sub-video; and select a target region from candidate regions of the target sub-videos; and

a display module 805, configured to display a resource in the target region.

In a possible implementation, the first obtaining module 801 is configured to, for any sub-video in the target video, obtain optical flow information of the any sub-video; and delete the any sub-video responsive to the optical flow information of the any sub-video not meeting an optical flow requirement, and using one or more sub-videos in sub-videos that are not deleted as the target sub-video or target sub-videos.

In a possible implementation, the optical flow information includes an optical flow density. The optical flow information of the any sub-video includes an optical flow density between every two successive image frames of the any sub-video and an average optical flow density of the any sub-video.

The first obtaining module 801 is configured to delete the any sub-video responsive to a ratio of an optical flow density between any two successive image frames of the any sub-video to the average optical flow density of the any sub-video exceeding a first threshold.

In a possible implementation, the optical flow information includes an optical flow angle. The optical flow information of the any sub-video includes an optical flow angle of each image frame of the any sub-video, an average optical flow angle of the any sub-video, and an optical flow angle standard deviation of the any sub-video.

The first obtaining module 801 is configured to delete the any sub-video responsive to a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

In a possible implementation, the optical flow information includes an optical flow density and an optical flow angle. The optical flow information of the any sub-video includes an optical flow density between every two successive image frames of the any sub-video, an average optical flow density of the any sub-video, an optical flow angle of each image frame of the any sub-video, an average optical flow angle of the any sub-video, and an optical flow angle standard deviation of the any sub-video.

The first obtaining module 801 is configured to delete the any sub-video responsive to a ratio of an optical flow density between any two successive image frames of the any sub-video to the average optical flow density of the any sub-video exceeding a first threshold and a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

In a possible implementation, the selection module 804 is configured to use any region in the plurality of regions as the candidate region of the any key frame responsive to a ratio of an area of the any region to an area of the any key frame exceeding a third threshold.

In a possible implementation, the first obtaining module 801 is configured to divide the target video according to shots, and obtain the one or more target sub-videos from sub-videos obtained through segmentation.

In the embodiments of this application, a key frame is automatically divided into a plurality of regions according to a color clustering method, and then a target region is selected from candidate regions that meet an area requirement to display a resource. An appropriate position for displaying a resource is determined by using an automatic retrieval method. Automatic retrieval has high efficiency, and can save time and reduce labor costs, thereby improving the efficiency of resource display.

When the apparatus provided in the foregoing embodiments implements functions of the apparatus, the division of the foregoing functional modules is merely an example for description. In the practical application, the functions may be assigned to and completed by different functional modules according to the requirements, that is, the internal structure of the device is divided into different functional modules, to implement all or some of the functions described above. In addition, the apparatus and method embodiments provided in the foregoing embodiments belong to one conception. For the specific implementation process, reference may be made to the method embodiments, and details are not described herein again.

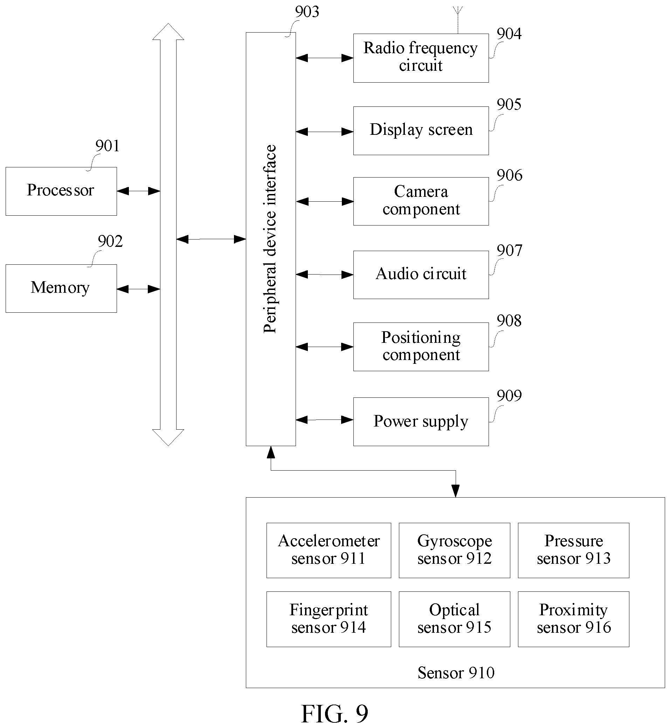

FIG. 9 is a schematic structural diagram of a resource display device according to an embodiment of this application. The device may be a terminal, for example, a smartphone, a tablet computer, a Moving Picture Experts Group Audio Layer III (MP3) player, a Moving Picture Experts Group Audio Layer IV (MP4) player, a notebook computer, or a desktop computer. The terminal may also be referred to as user equipment, a portable terminal, a laptop terminal, or a desktop terminal, among other names.

Generally, the terminal includes a processor 901 and a memory 902.

The processor 901 may include one or more processing cores, for example, a 4-core processor or an 8-core processor. The processor 901 may be implemented in at least one hardware form of a digital signal processor (DSP), a field-programmable gate array (FPGA), and a programmable logic array (PLA). The processor 901 may also include a main processor and a coprocessor. The main processor is a processor configured to process data in an awake state, and is also referred to as a central processing unit (CPU). The coprocessor is a low power consumption processor configured to process the data in a standby state. In some embodiments, the processor 901 may be integrated with a graphics processing unit (GPU). The GPU is configured to render and draw content that needs to be displayed on a display. In some embodiments, the processor 901 may further include an artificial intelligence (AI) processor. The AI processor is configured to process computing operations related to machine learning.

The memory 902 may include one or more computer-readable storage media. The computer-readable storage medium may be non-transient. The memory 902 may further include a high-speed random access memory and a nonvolatile memory, for example, one or more disk storage devices or flash storage devices. In some embodiments, the non-transitory computer-readable storage medium in the memory 902 is configured to store at least one instruction, and the at least one instruction being executed by the processor 901 to implement the resource display method according to the method embodiments in the embodiments of this application.

In some embodiments, the terminal may further optionally include a peripheral device interface 903 and at least one peripheral device. The processor 901, the memory 902, and the peripheral device interface 903 may be connected to each other by a bus or a signal cable. Each peripheral device may be connected to the peripheral device interface 903 by a bus, a signal cable, or a circuit board. Specifically, the peripheral device includes: at least one of a radio frequency (RF) circuit 904, a touch display screen 905, a camera component 906, an audio circuit 907, a positioning component 908, and a power supply 909.

The peripheral interface 903 may be configured to connect the at least one peripheral related to input/output (I/O) to the processor 901 and the memory 902. In some embodiments, the processor 901, the memory 902 and the peripheral device interface 903 are integrated on a same chip or circuit board. In some other embodiments, any one or two of the processor 901, the memory 902, and the peripheral device interface 903 may be implemented on a single chip or circuit board. This is not limited in this embodiment.

The RF circuit 904 is configured to receive and transmit an RF signal, also referred to as an electromagnetic signal. The RF circuit 904 communicates with a communication network and other communication devices through the electromagnetic signal. The radio frequency circuit 904 converts an electrical signal into an electromagnetic signal for transmission, or converts a received electromagnetic signal into an electrical signal. In a possible implementation, the RF circuit 904 includes: an antenna system, an RF transceiver, one or more amplifiers, a tuner, an oscillator, a digital signal processor, a codec chip set, a subscriber identity module card, and the like. The radio frequency circuit 904 may communicate with another terminal by using at least one wireless communication protocol. The wireless communication protocol includes, but is not limited to: a metropolitan area network, generations of mobile communication networks (2G, 3G, 4G, and 5G), a wireless local area network and/or a wireless fidelity (Wi-Fi) network. In some embodiments, the RF circuit 904 may further include a near field communication (NFC) related circuit. This is not limited in this embodiment of this application.

The display screen 905 is configured to display a user interface (UI). The UI may include a graph, text, an icon, a video, and any combination thereof. When the display screen 905 is a touch display screen, the display screen 905 is further capable of acquiring a touch signal on or above a surface of the display screen 905. The touch signal may be inputted to the processor 901 as a control signal for processing. At this time, the display screen 905 may further provide a virtual button and/or a virtual keyboard, also referred to as a soft button and/or a soft keyboard. In some embodiments, there may be one display screen 905 disposed on a front panel of the terminal. In some other embodiments, there may be at least two display screens 905 respectively disposed on different surfaces of the terminal or designed in a foldable shape. In still some other embodiments, the display screen 905 may be a flexible display screen, disposed on a curved surface or a folded surface of the terminal. Even, the display screen 905 may be further set in a non-rectangular irregular pattern, namely, a special-shaped screen. The display screen 905 may be prepared by using materials such as a liquid-crystal display (LCD), an organic light-emitting diode (OLED), or the like.

The camera component 906 is configured to acquire images or videos. In a possible implementation, the camera component 906 includes a front camera and a rear camera. Generally, the front-facing camera is disposed on the front panel of the terminal, and the rear-facing camera is disposed on a back surface of the terminal. In some embodiments, there are at least two rear cameras, which are respectively any of a main camera, a depth-of-field camera, a wide-angle camera, and a telephoto camera, to achieve background blur through fusion of the main camera and the depth-of-field camera, panoramic photographing and virtual reality (VR) photographing through fusion of the main camera and the wide-angle camera, or other fusion photographing functions. In some embodiments, the camera component 906 may further include a flash. The flash may be a monochrome temperature flash, or may be a double color temperature flash. The double color temperature flash refers to a combination of a warm light flash and a cold light flash, and may be used for light compensation under different color temperatures.

The audio circuit 907 may include a microphone and a speaker. The microphone is configured to acquire sound waves of a user and an environment, and convert the sound waves into an electrical signal to input to the processor 901 for processing, or input to the radio frequency circuit 904 for implementing voice communication. For the purpose of stereo sound acquisition or noise reduction, there may be a plurality of microphones, respectively disposed at different portions of the terminal. The microphone may further be an array microphone or an omni-directional acquisition type microphone. The speaker is configured to convert electrical signals from the processor 901 or the RF circuit 904 into acoustic waves. The speaker may be a conventional film speaker, or may be a piezoelectric ceramic speaker. When the speaker is the piezoelectric ceramic speaker, the speaker not only can convert an electric signal into acoustic waves audible to a human being, but also can convert an electric signal into acoustic waves inaudible to a human being, for ranging and other purposes. In some embodiments, the audio circuit 907 may further include an earphone jack.

The positioning component 908 is configured to position a current geographic location of the terminal, to implement a navigation or a location based service (LBS). The positioning component 908 may be a positioning component based on the Global Positioning System (GPS) of the United States, the BeiDou system of China, the GLONASS System of Russia, or the GALILEO System of the European Union.

The power supply 909 is configured to supply power to components in the terminal. The power supply 909 may be an alternating current, a direct current, a primary battery, or a rechargeable battery. When the power supply 909 includes the rechargeable battery, the rechargeable battery may support wired charging or wireless charging. The rechargeable battery may be further configured to support a fast charging technology.

In some embodiments, the terminal further includes one or more sensors 910. The one or more sensors 910 include, but are not limited to: an acceleration sensor 911, a gyroscope sensor 912, a pressure sensor 913, a fingerprint sensor 914, an optical sensor 915, and a proximity sensor 916.

The acceleration sensor 911 can detect acceleration sizes on three coordinate shafts of a coordinate system established based on the terminal. For example, the acceleration sensor 911 can be configured to detect components of gravity acceleration on three coordinate shafts. The processor 901 may control, according to a gravity acceleration signal acquired by the acceleration sensor 911, the touch display screen 905 to display the UI in a landscape view or a portrait view. The acceleration sensor 911 may be further configured to acquire motion data of a game or a user.

The gyroscope sensor 912 may detect a body direction and a rotation angle of the terminal, and the gyroscope sensor 912 may work with the acceleration sensor 911 to acquire a 3D action performed by the user on the terminal. The processor 901 may implement the following functions according to data acquired by the gyroscope sensor 912: motion sensing (for example, the UI is changed according to a tilt operation of the user), image stabilization during shooting, game control, and inertial navigation.

The pressure sensor 913 may be disposed at a side frame of the terminal and/or a lower layer of the display screen 905. If the pressure sensor 913 is disposed at the side frame of the terminal, a holding signal of the user for the terminal can be detected for the processor 901 to perform left and right hand recognition or quick operations according to the holding signal acquired by the pressure sensor 913. When the pressure sensor 913 is disposed on the lower layer of the touch display screen 905, the processor 901 controls, according to a pressure operation of the user on the touch display screen 905, an operable control on the UI. The operable control includes at least one of a button control, a scrollbar control, an icon control, and a menu control.

The fingerprint sensor 914 is configured to acquire a user's fingerprint, and the processor 901 identifies a user's identity according to the fingerprint acquired by the fingerprint sensor 914, or the fingerprint sensor 914 identifies a user's identity according to the acquired fingerprint. In a case of identifying that the user's identity is a trusted identity, the processor 901 authorizes the user to perform related sensitive operations. The sensitive operations include: unlocking a screen, viewing encrypted information, downloading software, paying, changing a setting, and the like. The fingerprint sensor 914 may be disposed on a front surface, a back surface, or a side surface of the terminal. When a physical button or a vendor logo is disposed on the terminal, the fingerprint sensor 914 may be integrated with the physical button or the vendor logo.

The optical sensor 915 is configured to acquire ambient light intensity. In an embodiment, the processor 901 may control the display brightness of the touch display screen 905 according to the ambient light intensity acquired by the optical sensor 915. Specifically, when the ambient light intensity is relatively high, the display brightness of the touch display screen 905 is increased. When the ambient light intensity is relatively low, the display brightness of the touch display screen 905 is decreased. In another embodiment, the processor 901 may further dynamically adjust a camera parameter of the camera component 906 according to the ambient light intensity acquired by the optical sensor 915.

The proximity sensor 916 is also referred to as a distance sensor and is generally disposed at the front panel of the terminal. The proximity sensor 916 is configured to acquire a distance between the user and the front face of the terminal. In an embodiment, when the proximity sensor 916 detects that the distance between the user and the front surface of the terminal gradually becomes smaller, the touch display screen 905 is controlled by the processor 901 to switch from a screen-on state to a screen-off state. When the proximity sensor 916 detects that the distance between the user and the front surface of the terminal gradually becomes larger, the touch display screen 905 is controlled by the processor 901 to switch from the screen-off state to the screen-on state.

A person skilled in the art may understand that a structure shown in FIG. 9 constitutes no limitation on the terminal. The terminal may include more or fewer components than those shown in the drawings, some components may be combined, and a different component may be used to construct the device.

In an exemplary embodiment, a computer device is further provided, including a processor and a memory, the memory storing at least one instruction, at least one program, a code set or an instruction set. The at least one instruction, the at least one program, the code set or the instruction set are configured to be executed by one or more processors to implement the foregoing resource display method.

In an exemplary embodiment, a computer-readable storage medium is further provided, the storage medium storing at least one instruction, at least one program, a code set or an instruction set, and the at least one instruction, the at least one program, the code set or the instruction set being executed by the processor of a computer device to implement the foregoing resource display method.

In a possible implementation, the computer-readable storage medium may be a read-only memory (ROM), a random access memory (random-access memory, RAM), a compact disc read-only memory (CD-ROM), a magnetic tape, a floppy disk, an optical data storage device, and the like.

In an exemplary embodiment, a computer program product or a computer program is provided. The computer program product or the computer program includes computer instructions, and the computer instructions are stored in a computer-readable storage medium. A processor of a computer device reads the computer instructions from the computer-readable storage medium and executes the computer instructions to cause the computer device to perform the foregoing resource display method.

"Plurality of" mentioned in the specification means two or more. "And/or" describes an association relationship for describing associated objects and represents that three relationships may exist. For example, A and/or B may represent the following three cases: Only A exists, both A and B exist, and only B exists. The character "/" in this specification generally indicates an "or" relationship between the associated objects.

The sequence numbers of the foregoing embodiments of this application are merely for description purpose but do not imply the preference among the embodiments.

The foregoing descriptions are merely exemplary embodiments of the embodiments of this application, but are not intended to limit the embodiments of this application. Any modification, equivalent replacement, or improvement made within the spirit and principle of the embodiments of this application shall fall within the protection scope of the embodiments of this application.

**Claims**

1. A resource display method, applicable to a computer device, the method comprising:

   obtaining one or more target sub-videos of a target video, each target sub-video comprising a plurality of image frames;
   obtaining at least one key frame of any target sub-video based on image frames of the any target sub-video;
   dividing any key frame of the any target sub-video into a plurality of regions according to color clustering, and using a region that meets an area requirement in the plurality of regions as a candidate region of the any key frame;
   using candidates regions of key frames of the any target sub-video as candidate regions of the any target sub-video; and selecting a target region from candidate regions of the target sub-videos, and displaying a resource in the target region.

2. The method according to claim 1, wherein the obtaining one or more target sub-videos of a target video comprises:

   for any sub-video in the target video, obtaining optical flow information of the any sub-video; and
   deleting the any sub-video responsive to the optical flow information of the any sub-video not meeting an optical flow requirement, and using one or more sub-videos in sub-videos that are not deleted as the target sub-video or target sub-videos.

3. The method according to claim 2, wherein the optical flow information comprises an optical flow density; the optical flow information of the any sub-video comprises an optical flow density between every two successive image frames of the any sub-video and an average optical flow density of the any sub-video; and

the deleting the any sub-video responsive to the optical flow information of the any sub-video not meeting an optical flow requirement comprises: deleting the any sub-video responsive to a ratio of an optical flow density between any two successive image frames of the any sub-video to the average optical flow density of the any sub-video exceeding a first threshold.

4. The method according to claim 2, wherein the optical flow information comprises an optical flow angle; the optical flow information of the any sub-video comprises an optical flow angle of each image frame of the any sub-video, an average optical flow angle of the any sub-video, and an optical flow angle standard deviation of the any sub-video; and

the deleting the any sub-video responsive to the optical flow information of the any sub-video not meeting an optical flow requirement comprises: deleting the any sub-video responsive to a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

5. The method according to claim 2, wherein the optical flow information comprises an optical flow density and an optical flow angle; the optical flow information of the any sub-video comprises an optical flow density between every two successive image frames of the any sub-video, an average optical flow density of the any sub-video, an optical flow angle of each image frame of the any sub-video, an average optical flow angle of the any sub-video, and an optical flow angle standard deviation of the any sub-video; and

the deleting the any sub-video responsive to the optical flow information of the any sub-video not meeting an optical flow requirement comprises: deleting the any sub-video responsive to a ratio of an optical flow density between any two successive image frames of the any sub-video to the average optical flow density of the any sub-video exceeding a first threshold and a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

6. The method according to any one of claims 1 to 5, wherein the using a region that meets an area requirement in the plurality of regions as a candidate region of the any key frame comprises:
using any region in the plurality of regions as the candidate region of the any key frame responsive to a ratio of an area of the any region to an area of the any key frame exceeding a third threshold.

7. The method according to any one of claims 1 to 5, wherein the obtaining one or more target sub-videos of a target video comprises:
segmenting the target video according to shots, and obtaining the one or more target sub-videos from sub-videos obtained through segmentation.

8. A resource display apparatus, comprising:

a first obtaining module, configured to obtain one or more target sub-videos of a target video, each target sub-video comprising a plurality of image frames;
a second obtaining module, configured to obtain at least one key frame of any target sub-video based on image frames of the any target sub-video;
a division module, configured to divide any key frame of the any target sub-video into a plurality of regions according to color clustering;
a selection module, configured to use a region that meets an area requirement in the plurality of regions as a candidate region of the any key frame; use candidate regions of key frames of the any target sub-video as candidate regions of the any target sub-video; and select a target region from candidate regions of the target sub-videos; and
a display module, configured to display a resource in the target region.

9. The apparatus according to claim 8, wherein the first obtaining module is configured to for any sub-video in the target video, obtain optical flow information of the any sub-video; and delete the any sub-video responsive to the optical flow information of the any sub-video not meeting an optical flow requirement, and use one or more sub-videos in sub-videos that are not deleted as the target sub-video or target sub-videos.

10. The apparatus according to claim 9, wherein the optical flow information comprises an optical flow density; the optical flow information of the any sub-video comprises an optical flow density between every two successive image frames of the any sub-video and an average optical flow density of the any sub-video; and the first obtaining module is configured to delete the any sub-video responsive to a ratio of an optical flow density between any two successive image frames of the any sub-video to the average optical flow density of the any sub-video exceeding a first threshold.

11. The apparatus according to claim 9, wherein the optical flow information comprises an optical flow angle; the optical flow information of the any sub-video comprises an optical flow angle of each image frame of the any sub-video, an average optical flow angle of the any sub-video, and an optical flow angle standard deviation of the any sub-video; and the first obtaining module is configured to delete the any sub-video responsive to a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

12. The apparatus according to claim 9, wherein the optical flow information comprises an optical flow density and an optical flow angle; the optical flow information of the any sub-video comprises an optical flow density between every two successive image frames of the any sub-video, an average optical flow density of the any sub-video, an optical flow angle of each image frame of the any sub-video, an average optical flow angle of the any sub-video, and an optical flow angle standard deviation of the any sub-video; and the first obtaining module is configured to delete the any sub-video responsive to a ratio of an optical flow density between any two successive image frames of the any sub-video to the average optical flow density of the any sub-video exceeding a first threshold and a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

13. The apparatus according to any one of claims 8 to 12, wherein the selection module is configured to use any region in the plurality of regions as the candidate region of the any key frame responsive to a ratio of an area of the any region to an area of the any key frame exceeding a third threshold.

14. The apparatus according to any one of claims 8 to 12, wherein the first obtaining module is configured to segment the target video according to shots, and obtaining the one or more target sub-videos from sub-videos obtained through segmentation.

15. A computer device, comprising a processor and a memory, the memory storing at least one instruction, the at least one instruction, when executed by the processor, implementing the following operations of the resource display method:

obtaining one or more target sub-videos of a target video, each target sub-video comprising a plurality of image frames;
obtaining at least one key frame of any target sub-video based on image frames of the any target sub-video;
dividing any key frame of the any target sub-video into a plurality of regions according to color clustering, and using a region that meets an area requirement in the plurality of regions as a candidate region of the any key frame;
using candidate regions of key frames of the any target sub-video as candidate regions of the any target sub-video; and selecting a target region from candidate regions of the target sub-videos, and displaying a resource in the target region.

16. The computer device according to claim 15, wherein the processor is configured to perform the following operations:

for any sub-video in the target video, obtaining optical flow information of the any sub-video; and
deleting the any sub-video responsive to the optical flow information of the any sub-video not meeting an optical flow requirement, and using one or more sub-videos in sub-videos that are not deleted as the target sub-video or target sub-videos.

17. The computer device according to claim 16, wherein the optical flow information comprises an optical flow density; the optical flow information of the any sub-video comprises an optical flow density between every two successive image frames of the any sub-video and an average optical flow density of the any sub-video; and the processor is configured to perform the following operation:
deleting the any sub-video responsive to a ratio of an optical flow density between any two successive image frames of the any sub-video to the average optical flow density of the any sub-video exceeding a first threshold.

18. The computer device according to claim 16, wherein the optical flow information comprises an optical flow angle; the optical flow information of the any sub-video comprises an optical flow angle of each image frame of the any sub-video, an average optical flow angle of the any sub-video, and an optical flow angle standard deviation of the any sub-video; and the processor is configured to perform the following operation:

deleting the any sub-video responsive to a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

19. The computer device according to claim 16, wherein the optical flow information comprises an optical flow density and an optical flow angle; the optical flow information of the any sub-video comprises an optical flow density between every two successive image frames of the any sub-video, an average optical flow density of the any sub-video, an optical flow angle of each image frame of the any sub-video, an average optical flow angle of the any sub-video, and an optical flow angle standard deviation of the any sub-video; and the processor is configured to perform the following operation:

deleting the any sub-video responsive to a ratio of an optical flow density between any two successive image frames of the any sub-video to the average optical flow density of the any sub-video exceeding a first threshold and a ratio of a first numerical value to the optical flow angle standard deviation of the any sub-video exceeding a second threshold, the first numerical value representing an absolute value of a difference between an optical flow angle of any image frame of the any sub-video and the average optical flow angle of the any sub-video.

20. The computer device according to any one of claims 15 to 19, wherein the processor is configured to perform the following operation:

using any region in the plurality of regions as the candidate region of the any key frame responsive to a ratio of an area of the any region to an area of the any key frame exceeding a third threshold.

21. The computer device according to any one of claims 15 to 19, wherein the processor is configured to perform the following operation:

segmenting the target video according to shots, and obtaining the one or more target sub-videos from sub-videos obtained through segmentation.

22. A computer-readable storage medium, storing at least one instruction, the at least one instruction, when executed, implementing the resource display method according to any one of claims 1 to 7.

23. A computer program product or a computer program, the computer program product or the computer program comprising computer instructions, the computer instructions being stored in a computer-readable storage medium, a processor of a computer device reading the computer instructions from the computer-readable storage medium, and the processor executing the computer instructions to cause the computer device to perform the resource display method according to any one of claims 1 to 7.

FIG. 1

Obtain one or more target sub-videos of a target video, each target sub-video including a plurality of image frames
201

Obtain at least one key frame of any target sub-video based on image frames of the any target sub-video
202

Divide any key frame of the any target sub-video into a plurality of regions according to color clustering, and use a region that meets an area requirement in the plurality of regions as a candidate region of the any key frame
203

Use candidate regions of key frames of the any target sub-video as candidate regions of the any target sub-video; and select a target region from candidate regions of the target sub-videos, and display a resource in the target region
204

FIG. 2

1. Obtain a target video

2. Segment the target video according to shots, to obtain a plurality of sub-videos

3. Automatically retrieve appropriate positions for displaying a resource in the sub-videos

Automatically retrieve an appropriate position for displaying a resource in a wall scene of the sub-videos

FIG. 3

Optical flow density

(1)

Optical flow angle

(2)

FIG. 4

(1)

(2)

FIG. 5

Candidate region

Candidate region

FIG. 6

Target region

(1)

(2)

FIG. 7

Resource display apparatus

First obtaining module — 801

Second obtaining module — 802

Division module — 803

Selection module — 804

Display module — 805

FIG. 8

903

904

Radio frequency
circuit

905

Display screen

906

Camera
component

907

Audio circuit

908

Positioning
component

909

Power supply

Peripheral device interface

901

Processor

902

Memory

| Accelerometer sensor 911 | Gyroscope sensor 912 | Pressure sensor 913 |
| Fingerprint sensor 914 | Optical sensor 915 | Proximity sensor 916 |

Sensor 910

FIG. 9

## INTERNATIONAL SEARCH REPORT

International application No.

**PCT/CN2020/097192**

| A. | CLASSIFICATION OF SUBJECT MATTER |
|---|---|
| | H04N 21/4782(2011.01)i |

According to International Patent Classification (IPC) or to both national classification and IPC

| B. | FIELDS SEARCHED |
|---|---|

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; CNKI; VEN; DWPI; WOTCT; EPTXT; USTXT: 视频, 颜色, 帧, 区域, 面积, 摘要, 缩略图, 关键, video, frame, color, colour, acreage, area, summary, abstract, key, thumbnail

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 108921130 A (LIAOCHENG UNIVERSITY) 30 November 2018 (2018-11-30) claims 1-5 | 1-23 |
| A | US 9396525 B2 (AVATAR MERGER SUB II LLC et al.) 19 July 2016 (2016-07-19) entire document | 1-23 |
| A | CN 105513098 A (TENCENT TECHNOLOGY BEIJING CO., LTD.) 20 April 2016 (2016-04-20) entire document | 1-23 |
| A | CN 103092963 A (TELEFRAME ELECTRONIC TECHNOLOGY (BEIJING) CO., LTD.) 08 May 2013 (2013-05-08) entire document | 1-23 |
| A | CN 107103301 A (SHANGHAI JIAO TONG UNIVERSITY) 29 August 2017 (2017-08-29) entire document | 1-23 |
| A | JP 2012015894 A (JVC KENWOOD CORPORATION) 19 January 2012 (2012-01-19) entire document | 1-23 |
| PX | CN 110290426 A (TENCENT TECHNOLOGY SHENZHEN CO., LTD.) 27 September 2019 (2019-09-27) claims 1-10, description paragraphs 0056-0149 | 1-23 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 September 2020** | **23 September 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/097192**

| Patent document cited in search report | | | Publication date (day/month/year) | Patent family member(s) | | | Publication date (day/month/year) |
|---|---|---|---|---|---|---|---|
| CN | 108921130 | A | 30 November 2018 | None | | | |
| US | 9396525 | B2 | 19 July 2016 | US | 10255948 | B2 | 09 April 2019 |
| | | | | US | 2016322079 | A1 | 03 November 2016 |
| | | | | US | 10283162 | B2 | 07 May 2019 |
| | | | | US | 10586570 | B2 | 10 March 2020 |
| | | | | US | 10438631 | B2 | 08 October 2019 |
| | | | | US | 9928874 | B2 | 27 March 2018 |
| | | | | US | 2015221069 | A1 | 06 August 2015 |
| | | | | US | 2015221136 | A1 | 06 August 2015 |
| | | | | US | 2015221118 | A1 | 06 August 2015 |
| | | | | US | 2015222821 | A1 | 06 August 2015 |
| | | | | US | 10566026 | B1 | 18 February 2020 |
| | | | | US | 2020160886 | A1 | 21 May 2020 |
| | | | | US | 2015221338 | A1 | 06 August 2015 |
| CN | 105513098 | A | 20 April 2016 | CN | 105513098 | B | 21 January 2020 |
| CN | 103092963 | A | 08 May 2013 | None | | | |
| CN | 107103301 | A | 29 August 2017 | CN | 107103301 | B | 10 March 2020 |
| CN | 110290426 | A | 27 September 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910550282